# EUROPEAN PATENT SPECIFICATION

(11) **EP 2 610 360 B1**
(45) Date of publication and mention of the grant of the patent: **25.10.2017**
(21) Application number: 11819817.5
(22) Date of filing: 15.08.2011
(51) Int. Cl.: C22C 19/05, C22F 1/10, F01D 5/28, F01D 25/00, F02C 7/00, C22F 1/00

(54) **CO-BASED ALLOY**
CO-BASISLEGIERUNG
ALLIAGE À BASE DE CO

(30) Priority: 23.08.2010 JP 2010186562
(43) Date of publication of application: 03.07.2013
(73) Proprietor: Mitsubishi Hitachi Power Systems, Ltd., Yokohama 220-8401 (JP); Tohoku University, Aoba-ku Sendai-shi Miyagi (JP)
(72) Inventor: SATO, Jun, Hitachi-shi, Ibaraki (JP); IMANO, Shinya, Hitachi-shi, Ibaraki (JP); OSAKI, Mototsugu, Nagoya-shi, Aichi, (JP); UETA, Shigeki, Nagoya-shi, Aichi (JP); ISHIDA, Kiyohito, Sendai-shi, Miyagi, (JP); OMORI, Toshihiro, Sendai-shi, Miyagi (JP); NISHIDA, Hiroaki, Saitama (JP); HAYASHI, Masahiro, Saitama, (JP); SHIOTA, Tomoki, Saitama, (JP)
(74) Representative: Beetz & Partner mbB
(86) International application number: PCT/JP2011/068505
(87) International publication number: WO 2012/026354

(56) References cited:
- EP-A1- 1 154 027
- EP-A1- 1 378 579
- EP-A1- 1 410 872
- EP-A2- 2 172 299
- WO-A1-00/44950
- JP-A- 2004 136 301
- JP-A- 2009 228 024
- JP-A- 2009 228 024
- US-A- 4 116 723
- HOLT R T: "Impurities and Trace Elements in Nickel-Base Superalloys", INTERNATIONAL METALS REVIEW, METALS SOCIETY, LONDON, GB, vol. 21, no. 1, 1 March 1976 (1976-03-01), pages 1-24, XP009173776, ISSN: 0308-4590

## Description

### Technical Field

The present invention relates to a Co-based alloy suitable for various components required to have a high strength in a high-temperature environment, such as for a gas turbine, an aircraft engine, a chemical plant, a vehicle engine and a high-temperature furnace. In particular, it relates to a Co-based suitable for casting.

### Background Art

ANi-based alloy, a Co-based alloy, an Fe-based alloy or the like have been known as a superalloy used at a high-temperature. The Ni-based alloy is precipitation-strengthened by a γ' phase having an L1₂ structure (Ni₃(Al, Ti)), and exhibits a reverse temperature dependency where strength increases as a temperature increases. In addition, the Ni-based alloy has excellent high-temperature properties such as heat resistance, corrosion resistance, oxidation resistance and creep resistance. Thus, the Ni-based alloy is used for various purposes which require a high strength in a high-temperature environment. However, there is a problem that the Ni-based alloy is inferior in machinability and hot workability.

In contrast, the Co-based alloy is used rather than the Ni-based alloy for high-temperature applications when particularly corrosion resistance and ductility are required. However, there was a problem that a conventional Co-based alloy has a lower high-temperature strength than the Ni-based alloy and is inferior in hot workability to the Ni-based alloy, since a γ'-type intermetallic compound effective for improving the high-temperature strength properties of the Co-based alloy was not known.

In order to solve the problem, various attempts have been conventionally proposed.

For example, WO 2007/032293 A1 discloses a Co-based alloy including, by mass, 0.1 to 10% ofAl, 3.0 to 45% of W, and the balance of Co and inevitable impurities, and having a precipitate of an L1₂-type intermetallic compound Co₃(Al, W).

WO 2007/032293 A1 discloses that a high-temperature strength is increased by uniformly and finely precipitating Co₃(Al, W) in a matrix and that hot working becomes possible by adjusting the Co-based alloy to have a predetermined composition.

JP-A-2009-228024 discloses a Co-based alloy including not less than 0.1 and not more than 20.0 mass% of Cr, not less than 1.0 and not more than 6.0 mass% of Al, not less than 3.0 and not more than 26.0 mass% of W, not more than 50.0 mass% of Ni, and the balance of Co and inevitable impurities, and satisfying that Cr+Al is not less than 5.0 and not more than 20.0 mass%, and that a volume ratio of second phases composed of a phase represented by A₇B₆ and a Laves phase represented by A₂B is not more than 10%.

JP-A-2009-228024 discloses that the Co-based alloy exhibits high-temperature strength equal to or greater than that of a Ni-based alloy, when the alloy includes predetermined amounts of Al and W and is subjected to homogenizing heat treatment and aging treatment under predetermined conditions to precipitate a Co₃(Al, W) strengthening phase.

The Co-based alloy including precipitated Co₃(Al, W) as the strengthening phase (γ' phase) exhibits high-temperature strength properties equal to or greater than those of a Ni-based alloy. However, the Co-based alloy including Al and W may have a second phase precipitate depending on heat treatment conditions, that is harmful to processing. Thus, hot workability may be significantly decreased. In particular, hot workability is an important property for an alloy for casting, and thus a balance between hot workability and strength is necessary.

As disclosed in JP-A-2009-228024, precipitation of the second phase can be suppressed to some extent and hot workability can be improved by optimizing the composition of the alloy. However, high-temperature strength properties of a conventional alloy are not always sufficient.

The document EP 1410872 A1 teaches a Co-based alloy for use as a welding material with a tungsten concentration between 5 and 14 mass%.

### Summary of Invention

It is an object of the invention to provide a Co-based alloy having a high-temperature strength higher than that of a conventional Co-based alloy and hot workability equal to or greater than that of the conventional alloy, and being suitable for casting.

In order to solve the problem, the invention proposes a Co-based alloy according to claim 1.

A Co-based alloy including Al and W easily generates a phase harmful to hot workability. In particular, when excessive W is contained, a harmful phase is generated within grains and in grain boundaries, and thus hot workability is significantly decreased.

However, when a Co-based alloy has a composition adjusted in a predetermined range (in particular Al and W contents) and is subjected to homogenizing heat treatment, the Co-based alloy can include less harmful phase. In addition, when the alloy is subjected to solution heat treatment and aging treatment under predetermined conditions after hot working, a Co₃(Al, W) strengthening phase (γ' phase) is precipitated. Furthermore, when a predetermined amount of carbon is added to the Co-based alloy containing predetermined amounts of Al, W and Cr, carbide containing W and/or Cr is precipitated in addition to the γ' phase after the aging treatment. At this time, granular carbide can be precipitated in grain boundaries of a γ phase matrix by optimizing the carbon content. The granular carbide precipitated in the grain boundaries has a large effect of suppressing grain boundary sliding at a high temperature.

That is, a predetermined amount of carbide is precipitated in the grain boundaries in addition to the precipitation of the γ' phase, thereby a creep rupture property or high-temperature ductility, which is specifically required for a high-temperature material, is remarkably improved in comparison to a conventional Co-based alloy. Accordingly, a Co-based alloy having endurance strength equal to or greater than that of an existing Ni-based alloy can be obtained.

Other purposes, features and advantages of the invention will become apparent from the following description of Embodiments of the invention with reference to attached drawings.

### Brief Description of Drawings

[Fig. 1] Fig. 1 is a photograph of a microstructure of a ruptured portion in a Co-based alloy (Example 1) before a creep rupture test.
[Fig. 2] Fig. 2 is a photograph of a microstructure of the ruptured portion in the Co-based alloy (Example 1) after the creep rupture test.

### Detailed description of the invention

Hereinafter, an embodiment of the invention will be described in detail.

### 1. Co-based Alloy

### 1.1. Main Elements

A Co-based alloy according to the invention includes following elements, and the balance is Co and inevitable impurities. The elements, addition ranges thereof, and reasons for determining the ranges are explained as follows.

### (1) Not less than 0.001 and less than 0.100 mass% of Carbon

Carbon bonds to W and Cr, and contributes to carbide generation within grains and in grain boundaries. Precipitation of granular carbide in the grain boundaries is effective mainly for grain boundary strengthening, and improves hot workability and high-temperature strength. In particular, since elongation and reduction at a high temperature are improved due to improvement of the grain boundary strength, the granular carbide precipitation has a large effect of improving a tensile and creep rupture properties. In order to obtain the effects, the carbon content needs to be not less than 0.001 mass%. More preferably, the carbon content is not less than 0.005 mass%.

However, when carbon is added excessively, strength properties are decreased since grain strength is increased due to acceleration of carbide generation within the grains and precipitation of film carbide in the grain boundaries. Therefore, the carbon content needs to be less than 0.100 mass%. More preferably, the carbon content is less than 0.050 mass%.

In the Co-based alloy according to the invention, carbide is precipitated in the grain boundaries in an optimum form by optimizing the carbon content in addition to the contents of Cr and W, thereby improving high-temperature ductility, and thus significant improvement of properties can be achieved. The term "carbide" means various kinds of carbides mainly containing carbon and Cr and/or W.

### (2) Not less than 9.0 and less than 20.0 mass% of Cr

Cr is effective for improving oxidation resistance since Cr bonds to oxygen and forms a dense Cr₂O₃ layer on its surface. If a Cr content is low, it becomes difficult to form the dense Cr₂O₃ layer, and sufficient oxidation resistance can not be obtained. In addition, Cr bonds to carbon and generates various kinds of carbides within grains and in grain boundaries, and thus, contributes to improvement of hot workability and high-temperature ductility. In order to obtain the effects, the Cr content needs to be not less than 9.0 mass%. Cr is added, more preferably, not less than 10.0 mass%, and further preferably, not less than 10.5 mass%.

However, when the Cr content becomes excessive, a melting point of the Co-based ally is lowered to cause a decrease in mechanical properties at a high temperature. Therefore, the Cr content needs to be less than 20.0 mass%. The Cr content is, more preferably, less than 19.5 mass%, and further preferably, less than 18.5 mass%.

In the Co-based alloy according to the invention, carbide is precipitated in an optimum form by optimizing the Cr content, and thus, significant improvement of high-temperature ductility can be achieved.

### (3) Not less than 2.0 and less than 5.0 mass% of Al

Al stabilizes an L1₂-type intermetallic compound phase (γ' phase) of Co₃(Al, W). Al is a necessary element for precipitating the metastable γ' phase as a stable phase and improves high-temperature strength. If an Al content is low, a sufficient amount of the γ' phase for improving strength properties can not be generated. In addition, similar to Cr, Al improves oxidation resistance since it generates Al₂O₃. In order to obtain the effects, the Al content needs to be not less than 2.0 mass%. The Al content is, more preferably, not less than 2.5 mass%, and further preferably, not less than 3.0 mass%.

However, when the Al content becomes excessive, a melting point of the Co-based alloy is raised and high-temperature properties (hot workability and high-temperature ductility) are decreased. Therefore, the Al content needs to be less than 5.0 mass%. The Al content is, more preferably, less than 4.5 mass%, and further preferably, less than 4.3 mass%.

The "L1₂-type intermetallic compound phase (γ' phase) of Co₃(Al, W)" includes not only the γ' phase made of Co, Al and W, but also that in which a part of a Co and/or an (Al, W) site is replaced by other element(s).

### (4) Not less than 13.0 and less than 20.0 mass% of tungsten

Tungsten stabilizes the L1₂-type intermetallic compound phase (γ' phase) of CO₃(Al, W). Tungsten is a necessary element for generating the γ' phase that is effective for obtaining a high-temperature strength. If the tungsten content is low, an amount of the γ' phase sufficient for improving strength can not be generated. In addition, tungsten bonds to carbon and generates various carbides. Precipitation of the carbides in grain boundaries is effective for improving high-temperature strength, specifically high-temperature ductility (elongation, reduction). In order to obtain the effects, the tungsten content needs to be not less than 13.0 mass%. The tungsten content is, according to the invention, not less than 14.5 mass%, and further preferably, not less than 15.0 mass%.

However, when the tungsten content becomes excessive, a harmful phase, such as µ phase represented by A₇B₆, is formed within grains and in grain boundaries and thus hot workability is significantly decreased. Therefore, the tungsten content needs to be less than 20.0 mass%. The tungsten content is, more preferably, less than 19.0 mass%, and further preferably, less than 18.0 mass%.

The "A₇B₆ compound (µ phase)" is a compound derived from Co₇W₆, and also includes a compound in which an A site (Co site) is replaced by Ni, Cr, Al, Fe or the like and a B site (W site) is replaced by Ta, Nb, Ti, Zr or the like.

### (5) Not less than 39.0 and less than 55.0 mass% of Ni

Ni replaces a Co site to generate an L1₂-type intermetallic compound phase of (Co, Ni)₃(Al, W). Moreover, Ni is equally distributed in an matrix γ phase and the strengthening γ' phase. In particular, when a Co site of the γ' phase is replaced by Ni, a solid solution temperature of the γ' phase is increased and high-temperature strength is improved. In order to obtain the effect, the Ni content needs to be not less than 39.0 mass%. The Ni content is, more preferably, not less than 41.0 mass%, and further preferably, not less than 43.0 mass%.

However, when the Ni content becomes excessive, a melting point of the matrix γ phase is lowered and hot workability is decreased. Therefore, the Ni content needs to be less than 55.0 mass%. The Ni content is, more preferably, less than 52.0 mass%, and further preferably, less than 50.0 mass%.

### 1.2. Inevitable Impurities

In the Co-based alloy according to the invention, Mo, Nb, Ti and Ta among the inevitable impurities particularly need to be within the following ranges.

### (6) Less than 0.010 mass% of Mo

Mo functions as a solid solution strengthening element. However, strengthening by Mo is smaller than that by Ta. Moreover, addition of Mo decreases oxidation resistance. Therefore, a Mo content needs to be less than 0.010 mass%.

### (7) Less than 0.010 mass% of Nb

Nb has an effect of improving a high-temperature strength in a Ni-based alloy since Ni₃Nb as a γ" (γ double prime) phase is precipitated. However, the γ" phase is not precipitated by addition of Nb in a Co-based alloy, thereby resulting in a decrease in hot workability and high-temperature strength due to a lowered melting point. Therefore, the Nb content needs to be less than 0.010 mass%.

### (8) Less than 0.010 mass% of Ti

Ti replaces an Al site of Ni₃Al in a Ni-based alloy and is effective for strengthening the γ' phase. However, an excessive addition of Ti increases a γ' solid solution temperature and decreases a melting point of a matrix, thereby resulting in a decrease in workability. In a Co-based alloy, an excessive addition of Ti decreases a melting point, thereby resulting in a decrease in hot workability and high-temperature strength. Therefore, the Ti content needs to be less than 0.010 mass%.

### (9) Less than 0.010 mass% of Ta

Ta functions to effect solid-solution strengthening of a γ' phase, and is effective for improving high-temperature strength. However, high-temperature ductility is significantly decreased by an addition of Ta. As a result, specifically a high-temperature creep rupture property is decreased, since rupture is early generated due to a decrease in ductility. Therefore, a Ta content needs to be less than 0.010 mass%.

### 1.3. Sub-constituent Elements

In addition to the above elements, the Co-based alloy according to the invention may further include one or more of the following elements. The supplemental additional elements, ranges thereof, and reasons for determining the ranges are as follows.

### (10) Not less than 0.0001 and less than 0.020 mass% of boron

### (11) Not less than 0.0001 and less than 0.10 mass% of Zr

Boron and Zr function to strength grain boundaries, and promote to improve hot workability. In order to obtain the effect, a boron content is preferably 0.0001 mass%. In addition, a Zr content is preferably not less than 0.0001 mass%.

However, when the boron or Zr content becomes excessive, workability is decreased in each case. Therefore, the boron content is preferably less than 0.020 mass%. In addition, the Zr content is preferably less than 0.10 mass%.

### (12) Not less than 0.0001 and less than 0.10 mass% of Mg

### (13) Not less than 0.0001 and less than 0.20 mass% of Ca

Both Mg and Ca fix S and promote to improve hot workability. In order to obtain the effect, a Mg content is preferably not less than 0.0001 mass%. In addition, a Ca content is preferably not less than 0.0001 mass%.

However, when a Mg or Ca content becomes excessive with respect to S, a compound of Mg or Ca is formed, thereby resulting in a decrease in workability. Therefore, the Mg content is preferably less than 0.10 mass%. In addition, the Ca content is preferably less than 0.20 mass%.

### 1.4. Microstructure

When the Co-based alloy according to the invention is subjected to casting, homogenizing heat treatment, hot working, solution treatment and aging treatment under conditions as described below , the Co-based alloy includes a matrix γ phase, and a carbide and γ' phase precipitated in the matrix. The γ' phase is precipitated mainly within grains of the matrix. However, the carbide is precipitated both within the grains and in grain boundaries of the matrix. In order to improve a high-temperature strength, the carbide is preferably precipitated in the grain boundaries. Moreover, in order to suppress grain boundary sliding at a high temperature, a shape of the carbide precipitated in the grain boundaries is preferably granular.

When the Co-based alloy according to the invention after hot working is subjected to solution treatment and aging treatment of various conditions, the γ phase, the γ' phase and the carbide for suitable for various purposes can be obtained. The aging treatment is not limited to one-step aging treatment, and may include multiple-step aging treatment of two steps or more.

### 2. Manufacturing Methods of Co-based Alloy

### 2.1. Melting/Casting

Firstly, raw materials are prepared so that the above composition of the Co-based alloy is obtained, and are melted and cast. The invention does not limit a melting/casting method and conditions thereof, and various methods and conditions may be used.

### 2.2. Homogenizing Heat Treatment

Next, obtained ingot is subjected to homogenizing heat treatment (soaking). The homogenizing heat treatment means that for removing solidification segregation generated in the melting/casting process and homogenizing the contents. Hot workability can be improved by the homogenizing.

An optimum temperature is determined depending on the composition of the alloy. Generally, if the homogenizing heat treatment temperature is too low, a diffusion speed of an alloy element becomes slow, and a sufficient effect can not be obtained within a realistic time frame of the heat treatment. Therefore, the homogenizing heat treatment temperature is preferably 1000°C or higher.

However, if the homogenizing heat treatment temperature becomes too high, internal oxidation proceeds and hot workability is decreased. Therefore, the homogenizing heat treatment temperature is preferably 1250°C or lower.

When the alloy is held at a temperature at which the alloy takes a single γ phase, a heterogenous phase is generally disappeared within several hours and the single γ phase is obtained. However, a longer time period of the heat treatment is required to remove the solidification segregation generated in the melting/casting process. Generally, as the time for the homogenizing heat treatment becomes long, the contents of the alloy are uniformized and an amount of harmful phase for hot workability can be reduced. In order to reduce a volume ratio of the harmful phase, the time period for the homogenizing heat treatment is preferably 10 hours or longer.

When the Co-based alloy is subjected to the homogenizing heat treatment under predetermined conditions and then cooled, the alloy has the γ single phase and less harmful phase.

### 2.3. Hot Work

Next, the Co-based alloy after the homogenizing heat treatment is subjected to hot working, and is formed into various shapes. A hot working method and conditions thereof are not specifically limited, and various methods and conditions may be used for any purpose.

### 2.4. Solution Treatment

Next, the hot-worked Co-based alloy is subjected to solution treatment. The solution treatment is made for solid-soluting precipitates, such as γ'-phase or carbide, generated during the hot working process. A temperature for the solution treatment is preferably within a range of 1000 to 1250°C.

Optimum time period for the solution treatment is determined depending on the solution treatment temperature. Generally, as the solution treatment temperature becomes high, the precipitates can be solid-soluted in a short time.

### 2.5. Aging Treatment

Next, aging treatment is performed for the Co-based alloy after the solution treatment. By aging the Co-based alloy after the solution treatment in a (γ+γ') region, the γ' phase composed of an L1₂-type intermetallic compound of Co₃(Al, W) can be precipitated in the γ phase. At the same time, the carbide can be precipitated.

Conditions for the aging treatment are not specifically limited, and optimum conditions are selected depending on the composition of the alloy and/or purpose. Generally, as an aging temperature becomes high, and/or aging time becomes long, the precipitated amount of γ' phase is increased, or a grain size of the γ' phase becomes larger. It applies to the carbide.

Usually, the aging temperature is within a range of 500 to 1100°C (preferably, 600 to 1000°C), and the aging time is within a range of 1 to 100 hours, preferably, about 10 to 50 hours.

Multiple-step aging treatment at different temperatures may be employed. By the multiple-step aging treatment, the γ' phases with different sizes can be precipitated. Generally, large-sized γ' phase is effective for improving high-temperature properties, in particular, creep rupture property, while it decreases room-temperature properties. In contrast, small-sized γ' phase is effective for improving room-temperature properties, while it decreases high-temperature properties. Thus, when the γ' phases with different sizes are precipitated by the multiple-step aging treatment, both of high-temperature and room-temperature properties can be improved at the same time.

For example, in a case where two-step aging treatment is performed, an aging temperature for a first step is preferably in a range of 700 to 1100°C, and an aging temperature for a second step is preferably in a range of 500 to 900°C.

### 3. Advantages of the Co-based Alloy

A Co-based alloy containing Al and W in general generates a phase harmful to hot workability. In particular, excess W generates a harmful phase within grains and in grain boundaries, and hot workability is significantly decreased.

In contrast, a Co-based alloy with less harmful phase can be obtained when it has a predetermined composition (in particular, Al and W contents) and is subjected to a homogenizing heat treatment under predetermined conditions. In addition, Co₃(Al, W) strengthening phase (γ' phase) is precipitated by a solution treatment and an aging treatment under predetermined conditions after the hot working. Furthermore, when a predetermined amount of carbon is added to the Co-based alloy containing predetermined amounts of Al, W and Cr, carbide containing W and/or Cr is precipitated in addition to the γ' phase after the aging treatment. At this time, granular carbide can be precipitated in the grain boundaries of a matrix γ phase by optimizing the carbon content. The granular carbide precipitated in the grain boundaries has a large effect of suppressing grain boundary sliding at a high temperature.

That is, a creep rupture property (high-temperature ductility) specifically required for a high-temperature material is remarkably improved in comparison to a conventional Co-based alloy, by precipitating a predetermined amount of carbide in the grain boundaries in addition to the precipitation of the γ' phase. Accordingly, the Co-based alloy having endurance strength equal to or greater than that of an existing Ni-based alloy can be obtained.

### Examples

### (Examples 1 to 7, 10, 11 and 13-27, Comparative Examples 8, 9, 12 and 31 to 52)

### 1. Preparation of Specimens

Alloys having compositions shown in Tables 1 and 2 were each melted in a vacuum induction furnace to obtain a 50 kg ingot. Each ingot prepared by melting was subjected to homogenizing heat treatment at 1200°C for 16 hours. Then, the ingot was forged into a rod having a diameter of 16 mm. Solution treatment (ST) was performed for the forged material, under conditions of 1200°C and followed by air cooling for one hour. Then, two-step aging treatment (AG) was performed under conditions of 900°C for 24 hours followed by air cooling, and furthermore, under conditions of 800°C for 24 hours followed by air cooling.

**[Table 1]**

| | composition (mass%) | | | | | | | | | | |
|---|---|---|---|---|---|---|---|---|---|---|---|
| | C | Ni | Co | Cr | W | Al | B | Mg | Zr | Ca | others |
| Example 1 | 0.020 | 47.6 | Bal | 12.4 | 16.2 | 3.7 | - | - | - | - | - |
| Example 2 | 0.004 | 48.2 | Bal | 12.1 | 15.2 | 3.9 | - | - | - | - | - |
| Example 3 | 0.060 | 46.9 | Bal | 12.3 | 15.4 | 4.1 | - | - | - | - | - |
| Example 4 | 0.020 | 40.1 | Bal | 11.9 | 15.3 | 4.2 | - | - | - | - | - |
| Example 5 | 0.021 | 42.3 | Bal | 12.1 | 16.3 | 3.5 | - | - | - | - | - |
| Example 6 | 0.020 | 51.2 | Bal | 12.1 | 16.0 | 3.4 | - | - | - | - | - |
| Example 7 | 0.016 | 52.5 | Bal | 12.3 | 16.1 | 3.6 | - | - | - | - | - |
| Comparative Example 8 | 0.018 | 48.0 | Bal | 9.5 | 15.3 | 3.9 | - | - | - | - | - |
| Comparative Example 9 | 0.021 | 47.6 | Bal | 10.3 | 16.3 | 4.1 | - | - | - | - | - |
| Example 10 | 0.022 | 48.2 | Bal | 18.1 | 16.0 | 4.2 | - | - | - | - | - |
| Example 11 | 0.021 | 46.9 | Bal | 18.8 | 16.1 | 3.5 | - | - | - | - | - |
| Comparative Example 12 | 0.020 | 45.3 | Bal | 11.9 | 13.8 | 3.4 | - | - | - | - | - |
| Example 13 | 0.019 | 45.0 | Bal | 12.1 | 14.7 | 3.5 | - | - | - | - | - |
| Example 14 | 0.023 | 48.0 | Bal | 12.1 | 18.3 | 3.4 | - | - | - | - | - |
| Example 15 | 0.021 | 45.0 | Bal | 12.3 | 19.5 | 3.6 | - | - | - | - | - |
| Example 16 | 0.020 | 47.6 | Bal | 11.9 | 15.2 | 2.3 | - | - | - | - | - |
| Example 17 | 0.016 | 48.2 | Bal | 12.1 | 15.4 | 2.8 | - | - | - | - | - |
| Example 18 | 0.018 | 46.9 | Bal | 12.1 | 15.3 | 4.4 | - | - | - | - | - |
| Example 19 | 0.022 | 47.6 | Bal | 11.9 | 16.3 | 4.8 | - | - | - | - | - |
| Example 20 | 0.021 | 48.2 | Bal | 12.1 | 16.0 | 3.7 | 0.005 | - | - | - | - |
| Example 21 | 0.020 | 46.9 | Bal | 12.3 | 15.4 | 3.9 | - | 0.005 | - | - | - |
| Example 22 | 0.020 | 48.0 | Bal | 11.9 | 15.3 | 4.1 | - | - | 0.050 | - | - |
| Example 23 | 0.016 | 47.6 | Bal | 12.1 | 16.0 | 4.2 | 0.006 | 0.006 | - | - | - |
| Example 24 | 0.018 | 48.2 | Bal | 12.1 | 15.3 | 3.5 | - | 0.003 | 0.002 | - | - |
| Example 25 | 0.021 | 46.9 | Bal | 12.1 | 16.3 | 4.1 | 0.006 | - | 0.030 | - | - |
| Example 26 | 0.022 | 45.3 | Bal | 13.3 | 16.0 | 4.2 | 0.002 | 0.003 | 0.002 | - | - |
| Example 27 | 0.018 | 46.9 | Bal | 12.1 | 15.3 | 3.5 | - | - | - | - | - |

**[Table 2]**

| | composition (mass%) | | | | | | | | | | |
|---|---|---|---|---|---|---|---|---|---|---|---|
| | C | Ni | Co | Cr | W | Al | B | Mg | Zr | Ca | others |
| Comparative Example 31 | 0.130 | 41.3 | Bal | 14.3 | 16.3 | 3.8 | - | - | - | - | - |
| Comparative Example 32 | 0.020 | 47.6 | Bal | 2.5 | 15.4 | 3.7 | - | - | - | - | - |
| Comparative Example 33 | 0.021 | 48.2 | Bal | 22.1 | 16.1 | 3.6 | - | - | - | - | - |
| Comparative Example 34 | 0.020 | 25.2 | Bal | 12.7 | 14.9 | 4.0 | - | - | - | - | - |
| Comparative Example 35 | 0.016 | 60.0 | Bal | 12.3 | 15.3 | 3.9 | - | - | - | - | - |
| Comparative Example 36 | 0.018 | 46.9 | Bal | 12.7 | 10.3 | 4.1 | - | - | - | - | - |
| Comparative Example 37 | 0.021 | 45.3 | Bal | 11.9 | 20.2 | 4.2 | - | - | - | - | - |
| Comparative Example 38 | 0.022 | 45.0 | Bal | 12.1 | 16.1 | 1.8 | - | - | - | - | - |
| Comparative Example 39 | 0.021 | 48.0 | Bal | 12.3 | 16.3 | 5.2 | - | - | - | - | - |
| Comparative Example 40 | 0.020 | 47.5 | Bal | 11.8 | 15.2 | 3.5 | 0.2 | - | - | - | - |
| Comparative Example 41 | 0.019 | 47.8 | Bal | 11.9 | 15.4 | 3.4 | - | 0.2 | - | - | - |
| Comparative Example 42 | 0.023 | 47.3 | Bal | 12.1 | 15.3 | 3.6 | - | - | 0.3 | - | - |
| Comparative Example 43 | 0.021 | 48.2 | Bal | 12.7 | 15.2 | 3.5 | - | - | - | - | - |
| Comparative Example 44 | - | 47.8 | Bal | 10.1 | 16.3 | 3.2 | - | - | - | - | - |
| Comparative Example 45 | 0.025 | 47.5 | Bal | 11.7 | 16.4 | 3.5 | - | - | - | - | 1.8Mo |
| Comparative Example 46 | 0.023 | 48.3 | Bal | 11.9 | 15.9 | 3.7 | - | - | - | - | 3.0Nb |
| Comparative Example 47 | 0.021 | 47.7 | Bal | 11.8 | 16.2 | 3.6 | - | - | - | - | 1.9Ti |
| Comparative Example 48 | 0.024 | 47.9 | Bal | 11.5 | 15.7 | 3.7 | - | - | - | - | 2.8Ta |
| Comparative Example 49 | 0.024 | 47.6 | Bal | 10.9 | 14.9 | 3.4 | - | - | - | - | 0.5Mo |
| Comparative Example 50 | 0.024 | 47.3 | Bal | 11.5 | 14.4 | 3.9 | - | - | - | - | 0.5Nb |
| Comparative Example 51 | 0.024 | 47.5 | Bal | 12.2 | 15.9 | 4.2 | - | - | - | - | 0.3Ti |
| Comparative Example 52 | 0.024 | 46.7 | Bal | 11.7 | 16.3 | 4.1 | - | - | - | - | 0.6Ta |

### 2. Test Methods

### 2.1. Tensile Test

A test piece having a test portion with a diameter of 8 mm and a test piece length of 90 mm was cut out from each material. The test piece was subjected to a tensile test at 800°C to measure 0.2% yield stress and tensile strength.

### 2.2. Creep Rupture Test

A test piece having a parallel portion of 30 mm and a test piece length of 92.6 mm was cut out from each material. A creep rupture test was performed under conditions of 800°C and 294 MPa for the test piece to measure a rupture life, and elongation and reduction when rupturing.

### 2.3. Oxidation Test

A rectangular test piece having a size of 13 mmx25 mm and a thickness of 2 mm was cut out from each material. The test piece was continuously heated at 800°C in an air atmosphere for 200 hours, and then was air cooled. A weight increase by oxidation was calculated from a weight difference between before and after the test, and was used as an index of oxidation resistance.

### 3. Results

The results are shown in Tables 3 and 4.

### 3.1. Tensile Test

(1) Among Comparative Examples 31 to 52, the specimens which could be forged had low strength and high-temperature ductility.
(2) Each of Examples 1 to 7, 10, 11 and 13 - 27 and comparative examples 8, 9 and 12 exhibits high strength at 800°C, and has 0.2% yield stress of 700 MPa or greater and tensile strength of 850 MPa or greater. Moreover, each specimen has elongation of 10% or greater, which representing high-temperature ductility.
(3) Comparative Example 44 does not substantially contain carbon and has low tensile strength and elongation. This is because strengthening of grain boundary by carbide was not effected and rupture was early generated from the grain boundaries.

### 3.2. Creep Rupture Test

(1) Among Comparative Examples 31 to 52, specimens which could be forged had a short rupture life and poor high-temperature ductility.
(2) Each of Examples 1 to 7, 10, 11 and 13 - 27 and comparative examples 8, 9 and 12 had a rupture life of 1000 hours or longer, and had high elongation of 10% or greater and reduction of20% or greater.
(3) Comparative Example 44 does not substantially contain carbon and has a short rupture life and low elongation and reduction. This is because strengthening of grain boundary by carbide was not effected and rupture was early generated, as the case of high-temperature tensile property.

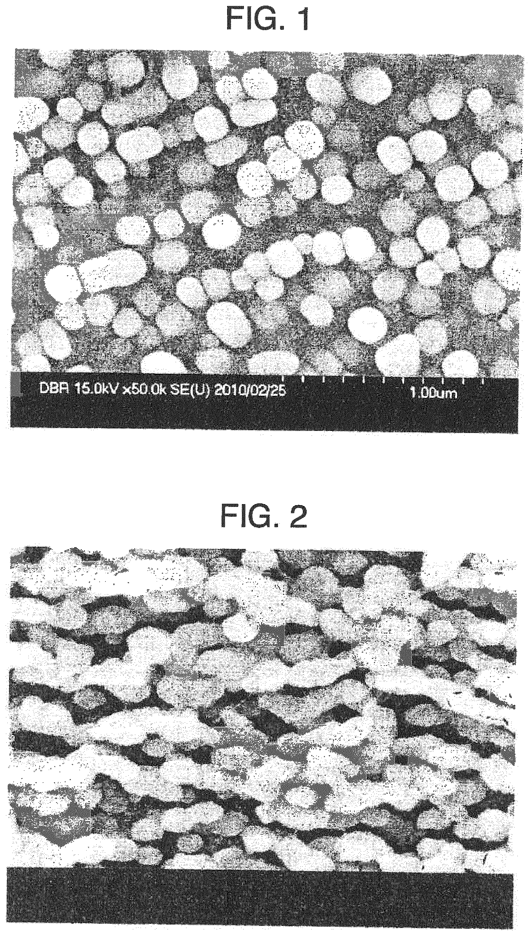

Figs. 1 and 2 show microstructures of a ruptured portion of the Co-based alloy (Example 1) before and after the creep rupture test. In the microstructure before the creep rupture test, the γ' phases precipitated in cubic or spherical grains are linked (raft structure) at a high-temperature and under a high stress. Moreover, precipitation of the carbide mainly containing W and Cr is observed in the grain boundaries. Since this is not observed in the microstructure after the test in the comparative examples, it is thought that high-temperature ductility behavior in the creep rupture test is closely related to the structural change of the γ' phase and the precipitation of the carbide in the grain boundaries.

### 3.3. Oxidation Test

(1) The weight increase by oxidation of the Co-based alloy is influenced by the Al and Cr contents. Since Comparative Example 38 has a lower Al content, oxidation resistance was decreased. In addition, Comparative Example 32 having a lower Cr content was impossible to be forged mainly due to grain boundary oxidation.
(2) Examples 1 to 7, 10, 11 and 13 - 27 and comparative examples 8, 9 and 12 exhibit excellent oxidation resistance.

**[Table 3]**

| | 800°C | | | 800°C-294 MPa | | | 800°C oxidation property, weight increase by oxidation (mg/cm²) |
|---|---|---|---|---|---|---|---|
| | 0.2% yield stress (MPa) | tensile strength (MPa) | elongation (%) | rupture life (H) | elongation (%) | reduction (%) | |
| Example 1 | 770 | 990 | 17.0 | 1450 | 14.1 | 28.0 | 0.20 |
| Example 2 | 752 | 954 | 15.8 | 1075 | 13.6 | 25.3 | 0.23 |
| Example 3 | 766 | 976 | 15.3 | 1296 | 12.5 | 26.4 | 0.21 |
| Example 4 | 714 | 878 | 16.6 | 1105 | 13.3 | 27.3 | 0.27 |
| Example 5 | 737 | 942 | 16.8 | 1362 | 13.5 | 27.8 | 0.23 |
| Example 6 | 763 | 971 | 16.8 | 1398 | 13.4 | 27.9 | 0.21 |
| Example 7 | 749 | 954 | 16.7 | 1287 | 13.3 | 27.4 | 0.20 |
| Comparative Example 8 | 737 | 882 | 13.6 | 1003 | 11.3 | 23.6 | 0.41 |
| Comparative Example 9 | 760 | 940 | 15.2 | 1298 | 12.4 | 25.8 | 0.32 |
| Example 10 | 735 | 923 | 14.5 | 1302 | 12.3 | 24.8 | 0.15 |
| Example 11 | 720 | 895 | 14.3 | 1192 | 11.6 | 23.6 | 0.13 |
| Comparative Example 12 | 732 | 863 | 16.9 | 1153 | 13.8 | 27.7 | 0.19 |
| Example 13 | 751 | 938 | 16.6 | 1303 | 13.9 | 28.1 | 0.21 |
| Example 14 | 768 | 987 | 12.3 | 1285 | 12.4 | 26.1 | 0.23 |
| Example 15 | 765 | 993 | 11.5 | 1039 | 11.1 | 24.3 | 0.26 |
| Example 16 | 719 | 905 | 16.9 | 1263 | 13.8 | 27.3 | 0.31 |
| Example 17 | 732 | 932 | 17.1 | 1324 | 14.0 | 27.5 | 0.25 |
| Example 18 | 758 | 970 | 16.5 | 1290 | 13.8 | 28.1 | 0.17 |
| Example 19 | 739 | 950 | 15.9 | 1156 | 13.6 | 27.6 | 0.15 |
| Example 20 | 772 | 989 | 17.3 | 1398 | 14.7 | 29.0 | 0.23 |
| Example 21 | 763 | 982 | 17.5 | 1432 | 15.0 | 28.8 | 0.21 |
| Example 22 | 771 | 993 | 18.1 | 1440 | 14.9 | 29.1 | 0.24 |
| Example 23 | 767 | 985 | 18.2 | 1486 | 15.1 | 29.3 | 0.20 |

**[Table 4]**

| | 800°C | | | 800°C-294 MPa | | | 800°C oxidation property, weight increase by oxidation (mg/cm²) |
|---|---|---|---|---|---|---|---|
| | 0.2% yield stress (MPa) | tensile strength (MPa) | elongation (%) | rupture life (H) | elongation (%) | reduction (%) | |
| Comparative Example 31 | 656 | 743 | 8.1 | 786 | 7.2 | 18.3 | 0.23 |
| Comparative Example 32 | forging impossible | | | | | | |
| Comparative Example 33 | 689 | 793 | 11.2 | 876 | 10.3 | 18.0 | 0.11 |
| Comparative Example 34 | 532 | 588 | 16.3 | 678 | 13.2 | 20.3 | 0.28 |
| Comparative Example 35 | 651 | 690 | 3.5 | 869 | 2.9 | 7.0 | 0.25 |
| Comparative Example 36 | 532 | 638 | 15.3 | 863 | 13.9 | 27.5 | 0.22 |
| Comparative Example 37 | forging impossible | | | | | | |
| Comparative Example 38 | 541 | 672 | 14.6 | 859 | 15.2 | 23.1 | 0.71 |
| Comparative Example 39 | 499 | 527 | 2.6 | 537 | 1.7 | 3.9 | 0.15 |
| Comparative Example 40 | forging impossible | | | | | | |
| Comparative Example 41 | forging impossible | | | | | | |
| Comparative Example 42 | forging impossible | | | | | | |
| Comparative Example 43 | forging impossible | | | | | | |
| Comparative Example 44 | 651 | 690 | 3.5 | 520 | 2.9 | 7.0 | 0.22 |
| Comparative Example 45 | forging impossible | | | | | | |
| Comparative Example 46 | forging impossible | | | | | | |
| Comparative Example 47 | forging impossible | | | | | | |
| Comparative Example 48 | forging impossible | | | | | | |
| Comparative Example 49 | 683 | 723 | 5.3 | 685 | 3.3 | 8.8 | 0.53 |
| Comparative Example 50 | 698 | 743 | 3.1 | 685 | 3.2 | 8.4 | 0.27 |
| Comparative Example 51 | 710 | 751 | 7.6 | 679 | 3.1 | 8.7 | 0.33 |
| Comparative Example 52 | 702 | 743 | 8.7 | 874 | 8.3 | 12.2 | 0.23 |

While the embodiment of the invention was described in detail above, the invention is not limited to the above embodiment, and various modifications may be made without departing from the spirit and scope of the invention.

### Industrial Applicability

The Co-based alloy according to the invention can be used for various components required to have a high strength in a high-temperature environment, such as a gas turbine component, an aircraft engine component, a chemical plant component, a vehicle engine component or a high-temperature furnace component.

## Claims

1. A Co-based alloy comprising:
- not less than 0.001 and less than 0.100 mass % of C;
- not less than 10.5 and less than 20.0 mass % of Cr;
- not less than 2.0 and less than 5.0 mass % of Al;
- not less than 14.5 and less than 20.0 mass % of W;
- not less than 39.0 and less than 55.0 mass % of Ni; and
the balance being Co and inevitable impurities, wherein the impurities include
- less than 0.010 mass% of Mo,
- less than 0.010 mass% of Nb,
- less than 0.010 mass% of Ti, and
- less than 0.010 mass% of Ta,
the Co-based alloy optionally comprising
- not less than 0.0001 and less than 0.020 mass % of B and
- not less than 0.0001 and less than 0.10 mass % of Zr and furthermore optionally comprising at least one of
- not less than 0.0001 and less than 0.10 mass % of Mg and
- not less than 0.0001 and less than 0.20 mass % of Ca.

2. The Co-based alloy according to claim 1, comprising:
- not less than 10.5 and less than 18.5 mass % of Cr;
- not less than 2.5 and less than 4.5 mass % of Al;
- not less than 14.5 and less than 19.0 mass % of W; and not less than 41.0 and less than 52.0 mass % of Ni:

3. The Co-based alloy according to claim 1, comprising:
- not less than 0,005 and less than 0,05 mass % of C;
- not less than 10,5 and less than 18.5 mass % of Cr;
- not less than 3.0 and less than 4.3 mass % of Al;
- not less than 15.0 and less than 18.0 mass % of W;
- not less than 43.0 and less than 50.0 mass % of Ni;

4. The Co-based alloy according to claim 1, 2 or 3 produced through hot working, solution treatment and aging treatment, the alloy comprising a γ phase matrix, carbide precipitated in the matrix, and a γ' phase composed of an L1₂-type intermetallic compound.

## Patentansprüche

1. Legierung auf Co-Basis, die aufweist:
- nicht weniger als 0,001 und weniger als 0,100 Gew.-% C;
- nicht weniger als 10,5 und weniger als 20,0 Gew.-% Cr;
- nicht weniger als 2,0 und weniger als 5,0 Gew.-% Al;
- nicht weniger als 14,5 und weniger als 20,0 Gew.-% W;
- nicht weniger als 39,0 und weniger als 55,0 Gew.-% Ni; und
wobei es sich bei dem Rest um Co und unvermeidliche Verunreinigungen handelt, wobei die Verunreinigungen umfassen:
- weniger als 0,010 Gew.-% Mo,
- weniger als 0,010 Gew.-% Nb,
- weniger als 0,010 Gew.-% Ti, und
- weniger als 0,010 Gew.-% Ta,
wobei die Legierung auf Co-Basis optional aufweist:
- nicht weniger als 0,0001 und weniger als 0,020 Gew.-% B und
- nicht weniger als 0,0001 und weniger als 0,10 Gew.-% Zr und ferner optional:
- nicht weniger als 0,0001 und weniger als 0,10 Gew.-% Mg und/oder
- nicht weniger als 0,0001 und weniger als 0,20 Gew.-% Ca,

2. Legierung auf Co-Basis nach Anspruch 1, die aufweist:
- nicht weniger als 10,5 und weniger als 18,5 Gew.-% Cr;
- nicht weniger als 2,5 und weniger als 4,5 Gew.-% Al;
- nicht weniger als 14,5 und weniger als 19,0 Gew.-% W; und
- nicht weniger als 41,0 und weniger als 52,0 Gew.-% Ni:

3. Legierung auf Co-Basis nach Anspruch 1, die aufweist:
- nicht weniger als 0,005 und weniger als 0,05 Gew.-% C;
- nicht weniger als 10,5 und weniger als 18,5 Gew.-% Cr;
- nicht weniger als 3,0 und weniger als 4,3 Gew.-% Al;
- nicht weniger als 15,0 und weniger als 18,0 Gew.-% W;
- nicht weniger als 43,0 und weniger als 50,0 Gew.-% Ni;

4. Legierung auf Co-Basis nach Anspruch 1, 2 oder 3, die durch Warmumformung, Lösungsglühen und Altern hergestellt ist, wobei die Legierung eine γ-Phasenmatrix, in der Matrix präzipitiertes Carbid und eine γ'-Phase aufweist, die aus einer intermetallischen Verbindung vom L1₂-Typ zusammengesetzt ist.

## Revendications

1. Alliage à base de Co comprenant :
- pas moins de 0,001 et moins de 0,100 % en masse de C ;
- pas moins de 10,5 et moins de 20,0 % en masse de Cr ;
- pas moins de 2,0 et moins de 5,0 % en masse d'A1 ;
- pas moins de 14,5 et moins de 20,0 % en masse de W ;
- pas moins de 39,0 et moins de 55,0 % en masse de Ni ; et
le reste étant du Co et des impuretés inévitables, dans lequel les impuretés incluent
- moins de 0,010 % en masse de Mo,
- moins de 0,010 % en masse de Nb,
- moins de 0,010 % en masse de Ti, et
- moins de 0,010 % en masse de Ta,
l'alliage à base de Co comprenant facultativement
- pas moins de 0,0001 et moins de 0,020 % en masse de B et
- pas moins de 0,0001 et moins de 0,10 % en masse de Zr et comprenant de plus facultativement au moins l'un parmi
- pas moins de 0,0001 et moins de 0,10 % en masse de Mg et
- pas moins de 0,0001 et moins de 0,20 % en masse de Ca.

2. Alliage à base de Co selon la revendication 1, comprenant :
- pas moins de 10,5 et moins de 18,5 % en masse de Cr ;
- pas moins de 2,5 et moins de 4,5 % en masse d'A1 ;
- pas moins de 14,5 et moins de 19,0 % en masse de W ; et
- pas moins de 41,0 et moins de 52,0 % en masse de Ni.

3. Alliage à base de Co selon la revendication 1, comprenant :
- pas moins de 0,005 et moins de 0,05 % en masse de C ;
- pas moins de 10,5 et moins de 18,5 % en masse de Cr ;
- pas moins de 3,0 et moins de 4,3 % en masse d'A1 ;
- pas moins de 15,0 et moins de 18,0 % en masse de W ;
- pas moins de 43,0 et moins de 50,0 % en masse de Ni.

4. Alliage à base de Co selon la revendication 1, 2 ou 3 produit par formage à chaud, traitement en solution et traitement de vieillissement, l'alliage comprenant une matrice de phase γ, un carbure précipité dans la matrice, et une phase γ' composée d'un composé intermétallique de type L1₂.
